(19) **Europäisches Patentamt**

**European Patent Office**

**Office européen des brevets**

(11) **EP 1 413 558 A1**

(12) **EUROPEAN PATENT APPLICATION**

(43) Date of publication:
**28.04.2004 Bulletin 2004/18**

(51) Int Cl.[7]: **C03B 37/027**, C03B 37/03

(21) Application number: **03023994.1**

(22) Date of filing: **22.10.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** | (72) Inventors: • **Lee, Jae-Ho, Samsung Electronics Co., Ltd.** **Suwon-city Kyungki-do (KR)** • **Oh, Sung-Koog, Samsung Electronics Co., Ltd.** **Suwon-city Kyungki-do (KR)** |
| (30) Priority: **23.10.2002 KR 2002064942** | (74) Representative: **Lang, Johannes, Dipl.-Ing.** **Bardehle Pagenberg Dost Altenburg Geissler Isenbruck,** **Postfach 86 06 20** **81633 München (DE)** |
| (71) Applicant: **SAMSUNG ELECTRONICS CO., LTD.** **Suwon-City, Kyungki-do (KR)** | |

(54) **Method and apparatus for drawing optical fiber using spin-amplitude modulation**

(57)     Disclosed is a method of drawing optical fibers using a spin-amplitude modulation for the manufacture of optical fibers from their preforms, which includes the steps of melting a portion (e.g. an end) of the optical fiber's preform with heat or other means and drawing it, and creating spin by repeating the spin-amplitude modulation process of giving spin to the melted/drawn optical fiber according to a predetermined spin function while changing the frequency of spin.

FIG.4

EP 1 413 558 A1

**Description**

BACKGROUND OF THE INVENTION

1. Field of the Invention

The present invention relates to a method of manufacturing optical fibers. More particularly, a method of manufacturing optical fibers, using a spin function with provides a twist to the optical fibers, and minimizing the polarization mode dispersion of the optical fibers.

2. Description of the Related Art

"Polarization Mode Dispersion" is a differential group delay phenomenon caused by geometrical defects in the optical fibers. It can also be caused by differences in traveling speeds among polarization modes of degenerated optical signals traveling within the optical fibers. The differential group delay causes superposition of the polarization modes that respectively constitute the optical signals.

The polarization mode dispersion is caused by dispersion of the materials that constitute the optical fibers. This is due (1) to the refractive characteristics of the material itself, and (2) by a geometrical change in the structure of the optical fibers, which results from external influences exerted on the optical fibers in various forms (such as tensions and axial forces applied to the optical fibers, thermal stresses due to changes in external temperature, etc.).

The polarization mode dispersion expands the spectrum width of optical signals and causes interference among the optical signals. As a result, the polarization mode dispersion limits both long-distance transmission and optical communication networks of a wavelength-division multiplexing type. Wavelength-division multiplexing multiplexes constant wavelength bands in optical communication.

A general method for minimizing the polarization mode dispersion is to give a "spin" to the optical fibers when drawing them. Two examples of methods for giving spin to the optical fibers are methods by means of (1) a spin function with a single frequency and (2) a spin function whose amplitude or frequency is modulated by a sine function. The amount of spin given to the optical fibers is commonly represented by the number of twists per unit length (tums/m).

For example, U.S. Patent No. 5,943,466 to Dany L. Henderson et al., entitled "Frequency and Amplitude Modulated Fiber Spins for PMD Reduction," discloses a method of giving spin to optical fibers by modulating the amplitude and frequency of the spin. In this patent, the amplitude and frequency of a spin function are modulated by a sine function.

In general, twists given to the optical fibers depend on spin functions whose amplitudes and frequencies are modulated by sine functions.

Given below is a spin function, in which a sine function, $f_m \sin(2\pi z / \Lambda)$, is added to a frequency term, $f_0 z$, and the frequency of the spin function is modulated by the sine function:

$$\alpha(z) = \alpha_0 \sin[2\pi(f_0 z + f_m \sin(2\pi z/\Lambda)] \qquad (1)$$

wherein, $\alpha(z)$ indicates a spin function representing the frequency and amplitude of spin given to the optical fibers; $\alpha_0$ is the amplitude of spin (in turns/m); $f_0$ is a central frequency; $f_m$ is a modulation frequency; $\Lambda$ is a modulation cycle; and z is a length measured in a direction along which the optical fibers are drawn.

Given below is another spin function whose amplitude is modulated by a sine function represented by $\alpha_0 \sin(2\pi z / \lambda)$:

$$\alpha(z) = [\alpha_0 \sin(2\pi z/\lambda)]\sin(2\pi f z) \qquad (2)$$

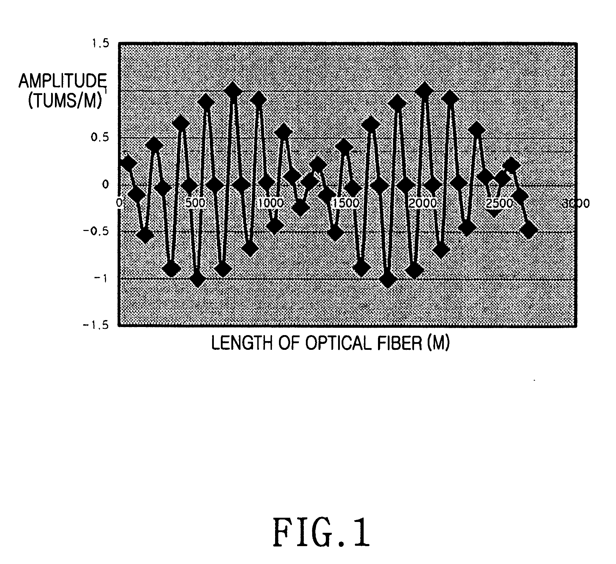

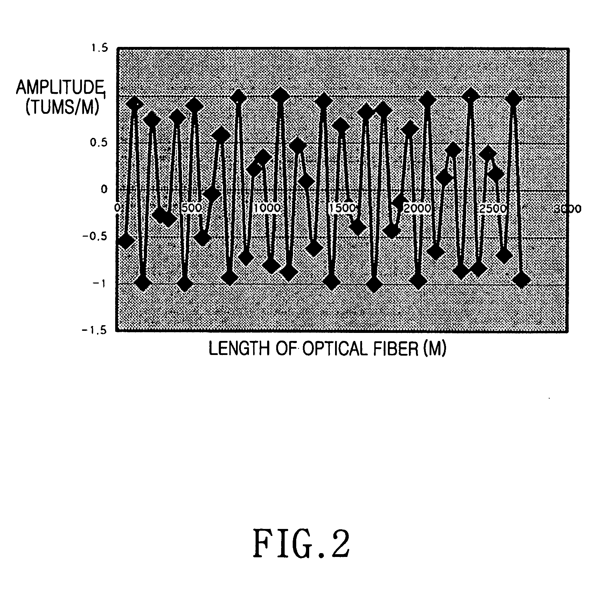

FIGs. 1 and 2 are graphs showing amplitude modulations of the spin functions by means of sine functions. In the above formula (2) the amplitude is modulated in a pattern like a sine function by means of the term $[\alpha_0 \sin(2\pi z / \lambda)]$. FIGs. 1 and 2 show spin functions where the number of twists, in turns per unit length of the optical fiber, is modulated according to sine functions.

The above-mentioned conventional methods of modulating the amplitudes and frequencies by sine functions all minimize primary polarization mode dispersion depending on distance.

However, the prior art methods of giving twists to optical fibers, such as by using sine functions to modulate amplitudes and frequencies, have shortcomings. For example, when using sine functions, although polarization mode dispersion of the optical signals with a single wavelength is reduced, reduction in deviation is not obvious; and secondary polarization mode dispersion, occurring in wavelength bands which are inputted in a multitude of channels, is not controlled. Moreover, polarization mode dispersion happens particularly strongly in a specific section or frequency. Therefore, the above-mentioned methods are not applicable to communication networks of wavelength-division multiplexing types, which are in common use.

SUMMARY OF THE INVENTION

The present invention reduces or overcome many of the above limitations by a method for giving spin to optical fibers, wherein not only primary polarization mode dispersion depending on distance, but also secondary polarization mode dispersion occurring in dependence upon wavelength, is properly controlled.

In accordance with principals of the present invention, a method is provided for drawing optical fibers using a spin-amplitude modulation for the manufacture of optical fibers from their preforms, which includes the steps of melting a portion (e.g. an end) of the optical fiber's preform with heat or other means and drawing it, and creating spin by repeating , the spin-amplitude modulation process of giving spin to the melted/drawn optical fiber according to a predetermined spin function while changing the frequency of spin.

BRIEF DESCRIPTION OF THE DRAWINGS

The present invention will be more apparent from the following detailed description taken in conjunction with the accompanying drawings, in which:

FIG. 1    is a graph showing an amplitude modulation of a spin function by means of a sine function of a prior art system;

FIG. 2    is a graph showing another amplitude modulation of a spin function by means of a sine function of a prior art system;

FIG. 3    is a graph showing the superposition of spin functions, as a result of superposition of a number of sine functions whose spin-frequencies are modulated in accordance with the principles of the present invention;

FIG. 4    shows an apparatus for giving multiple spins to optical fibers using a wheel, according to a preferred embodiment of the present invention; and

FIG. 5    shows an apparatus for giving multiple spins to optical fibers using two wheels, according to another embodiment of the present invention.

DETAILED DESCRIPTION OF THE PREFERRED EMBODIMENT

In the following description of the present invention, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments that depart from these specific details. Moreover, it will be recognized that certain aspects of the figures are simplified for explanation purposes and that the full system environment for the invention will comprise many known functions and configurations all of which need not be shown here. In the drawings, the same or similar elements are denoted by the same reference numerals even though they are depicted in different drawings.

According to the present invention, spins with different frequencies and amplitudes are given to optical fibers, according to spin functions with respective frequencies and amplitudes. This can be represented as the formula given below:

$$\alpha(z) = \alpha_0 \sin(2\pi f_0 z) + \alpha_1 \sin(2\pi f_1 z) \qquad (3)$$

where, $\alpha(z)$ indicates a spin function representing the frequency and amplitude of spin given to the optical fibers; $\alpha_0$ is the amplitude of spin (in turns/m); $f_0$ is a central frequency; $f_m$ is a modulation frequency; $\Lambda$ is a modulation cycle; and $z$ is a length measured in a direction along which the optical fibers are drawn.

The term $\alpha_0 \sin(2\pi f_0 z)$ in the above formula (3) is a first-order spin function applied to the optical fibers. And the term $\alpha_1 \sin(2\pi f_1 z)$ is a second-order spin function whose frequency and amplitude are different from those of the first-order spin function. The second-order spin function is applied to the optical fibers after the first-order spin function is applied. Consequently, optical fibers are first provided with spin, by means of a wheel or other conventional means, having an initial angle corresponding to the first-order spin function. Then, the optical fibers are provided with another spin by means of the second-order spin function with different frequency and amplitude. Accordingly, the present invention, using the above formula (3) enables the production of optical fibers with two types of spins, which have different frequencies and amplitudes.

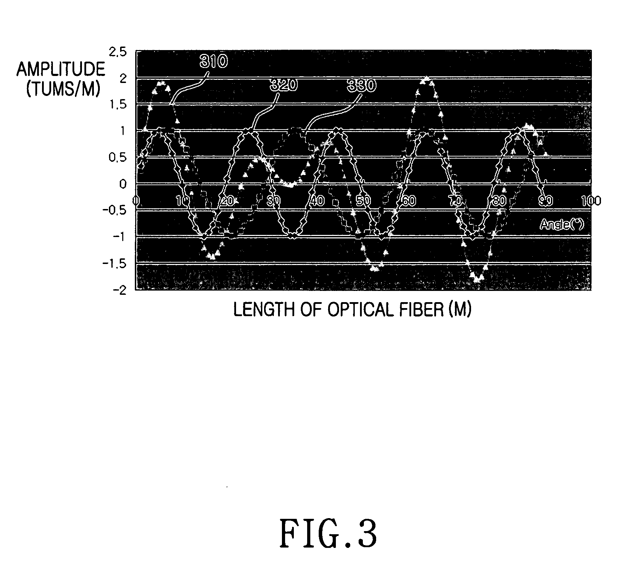

FIG. 3 is a graph showing the superposition of two different spin functions. In particular, there is shown a first spin function 320 with a predetermined frequency, and a second spin function 330 whose frequency is different from that of the first spin function. As a result of the superposition of the two spin functions, the optical fibers are provided with an aperiodic spin.

Given below is a formula representing the combination of a number of spin functions with different frequencies and amplitudes:

$$\alpha(z) = \sum_{n=1}^{m} \alpha_n \sin(2\pi f_n z) \quad \cdots \cdots (4)$$

This formula contains a sum of terms $\alpha_n$ and $f_n$, as the order n increases to a predetermined value m. Accordingly, a number of spin functions with different frequencies and amplitudes will give the optical fibers a number of corresponding spins.

According to another aspect of the present invention, a method of manufacturing optical fibers from their performs is provided comprising a melting, drawing and spin creation process, wherein the spin creation process includes the step of giving spin to a melted/drawn optical fiber, multiple times according to a predetermined spin function while changing the frequency of spin.

The melting and drawing process is implemented by heating the end of the optical fiber's perform and melting it, while rotating the preform.

The spin creation process is implemented by repeating the step of giving spin to the melted/drawn optical fiber, a predetermined number of times according to a predetermined spin function, while changing the frequency of spin.

In addition, the spin creation process can also be implemented by giving spin to the optical fiber according to a predetermined spin function, while changing the angle between the optical fiber and the axis of drawing. Also, the angle change is performed within a range on the path of which the optical fibers are drawn.

In the illustrative embodiment of the invention utilizing formula (3), the optical fiber is provided with two different spins according to two spin functions with different frequencies and amplitudes. In the illustrative embodiment of the invention utilizing formula (4), the optical fiber is provided with more than two spins according to more than two spin functions with different frequencies and amplitudes.

The respective spins given to the optical fibers are of asymmetric configurations with different frequencies and amplitudes.

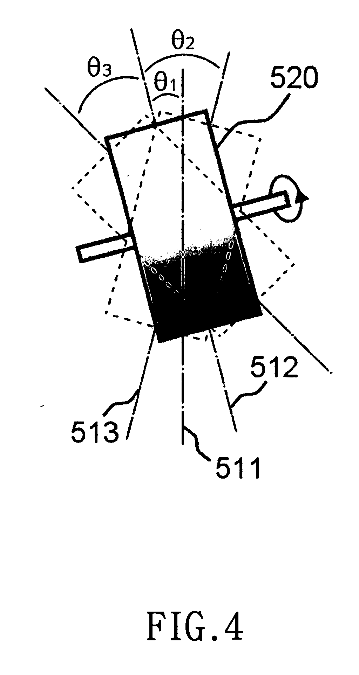

FIG. 4 is a plane view showing an apparatus for giving optical fibers a variety of spins using a single wheel 520, according to an embodiment of the present invention. Wheel 520's tilt is adjustable to a variety of tilt axes 512, 513, relative to a vertical drawing axis 511 of the optical fiber. Accordingly, wheel 520 can have a variety of tilt axes 512, 513 corresponding to respective spin functions (for example, using the above formula (4)), thereby giving the optical fibers a plurality of spins with different frequencies. Therefore, a variety of spins with different frequencies and amplitudes given to the optical fibers is archived by simply adjusting wheel 520's tilt axes 512, 513.

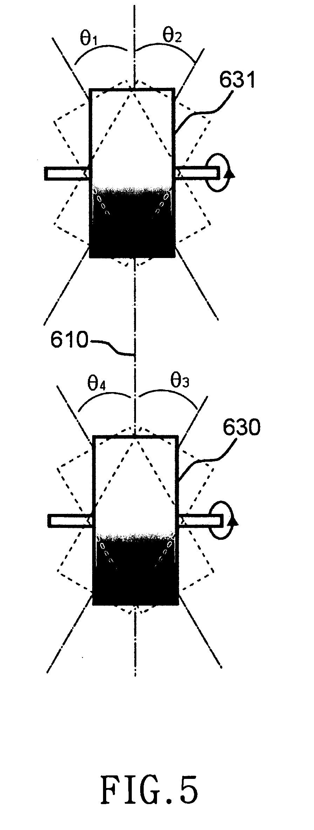

Referring now to FIG. 5 as well as formula (3) above, an apparatus for drawing optical fibers using a spin-amplitude modulation according to another embodiment of the present invention is described. The apparatus comprises a first wheel 631 giving the optical fibers spin with a predetermined frequency and amplitude, and a second wheel 630 giving the optical fiber another spin with a frequency and amplitude different from those of the first wheel 631.

More specifically, the first wheel 631 can tilt by adjustment to have a variety of tilt axes relative to vertical drawing axis 610, within a range permitted by the frequency and amplitude of the $\alpha_0 \sin(2\pi f_0 z)$ term of the above formula (3). Accordingly, the optical fibers are provided with spin with predetermined frequency and amplitude corresponding to a specific tilt axis.

Furthermore, the second wheel 630 gives the optical fibers another spin whose frequency and amplitude are different from those of the spin given by the first wheel 630, within a range permitted by the frequency and amplitude of the $\alpha_1 \sin(2\pi f_1 z)$ term of the above formula (3).

In other words, the first and second wheels can tilt by adjustment to have different tilt axes, thus giving the optical fibers respective spins with different frequencies and amplitudes.

In addition, a number of spin functions can be combined as in the above formula (4), and a number of additional wheels could be provided for that purpose.

Advantageously, according to the present invention, not only primary polarization mode dispersion, but also secondary polarization mode dispersion are reduced by repeating the step of giving the optical fibers respective spins of asymmetric configurations, according to spin functions with different frequencies and amplitudes, when drawing the optical fibers. Furthermore, characteristics of higher-order (i.e., higher than second-order) polarization mode dispersion can be improved.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of drawing optical fibers using a spin-amplitude modulation, for the manufacture of optical fibers from their preforms, the method comprising the steps of:

   melting a portion of the optical fiber's preform and drawing it; and
   creating spin, by at least once, repeating the spin-amplitude modulation process of giving spin to the melted/drawn optical fiber according to a predetermined spin function while changing the frequency of spin.

2. The method according to claim 1, further including the step of providing the optical fiber with spin of an asymmetric configuration.

3. The method according to claim 2, wherein the step of providing the optical fiber with a spin of an asymmetric configuration includes differing the amplitudes and frequencies of the spin function.

4. The method according to claim 1, wherein the step of creating spin includes combining two or more of spin functions and whose frequencies and amplitudes are different from each other, as represented by the formula below:

$$\alpha(z) = \sum_{n=1}^{m} \alpha_n \sin(2\pi f_n z)$$

wherein, $\alpha(z)$ is a sum of the spin functions; $\alpha_n$ is the amplitude of spin; $f_n$ is the frequency of spin; z is the length of the optical fiber; and m is an integer greater than 1 (one), indicating the order of the spin function in the left-hand side.

5. The method according to claim 1, wherein the portion of the optical fiber is an end.

6. A method of drawing optical fibers for the manufacture of optical fibers from their preforms, the method comprising the steps of:

    melting a portion of the optical fiber's perform;
    drawing the optical fiber; and
    creating spin to the optical fiber according to a predetermined spin function, while changing the angle between the optical fiber and the axis of drawing.

7. An apparatus for drawing optical fibers using a spin-amplitude modulation to give spin to the optical fibers, the apparatus comprising:

    a first wheel giving the optical fiber a first spin with a first frequency; and
    a second wheel giving the optical fiber a second spin with second frequency.

8. The apparatus according to claim 7, wherein the first spin further includes a first amplitude.

9. The apparatus according to claim 8, wherein the second spin further includes a second amplitude.

10. The apparatus according to claim 7, wherein the first wheel or the second wheel or both the first and second wheels are adjustable to a plurality of tilt axes, relative to a drawing axis of the optical fiber.

11. A method of drawing optical fibers for the manufacture of optical fibers from their preforms, the method comprising the steps of:

    drawing the optical fiber; and
    providing spin to the drawn optical fiber,

    wherein the spin is provided according to a predetermined spin function, and the spin function includes at least two components, each component having a different frequency of spin.

12. The method according to claim 9, wherein the step of providing spin further includes each component having a different amplitude.

FIG.1

FIG.2

LENGTH OF OPTICAL FIBER (M)

FIG.3

FIG.4

FIG.5

European Patent
Office

**EUROPEAN SEARCH REPORT**

Application Number

EP 03 02 3994

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 240 748 B1 (HENDERSON DANNY L ET AL) 5 June 2001 (2001-06-05) * column 4, line 58 - line 64; claim 1; figure 13 * * column 6, line 4 - line 6 * * column 8, line 51 - line 54 * ----- | 1-5 | C03B37/027 C03B37/03 |
| X | EP 0 582 405 A (AMERICAN TELEPHONE & TELEGRAPH) 9 February 1994 (1994-02-09) | 6-12 | |
| Y | * column 3, line 46 - line 52; claims 1,4,5; figures 3,4,6 * * column 5, line 3 - line 49 * ----- | 10 | |
| Y | US 2001/046358 A1 (OKUNO KAORU ET AL) 29 November 2001 (2001-11-29) * page 4, paragraph 45; figure 4 * ----- | 10 | |
| X | US 5 822 487 A (EVANS ALAN F ET AL) 13 October 1998 (1998-10-13) * column 2, line 51 - column 3, line 26; figures 5,7,8 * * column 4, line 28 - line 33 * * column 5, line 20 - line 47 * ----- | 1,6,7,11 | **TECHNICAL FIELDS SEARCHED (Int.Cl.7)** C03B |
| A | WO 98/46536 A (CORNING INC) 22 October 1998 (1998-10-22) * the whole document * ----- | 1-12 | |
| A | WO 02/03115 A (GALTAROSSA ANDREA ; PALMIERI LUCA (IT); PIZZINAT ANNA (IT); PIRELLI CA) 10 January 2002 (2002-01-10) * examples 6,7 * ----- | 1,6,11 | |

The present search report has been drawn up for all claims

| Place of search | Date of completion of the search | Examiner |
|---|---|---|
| Munich | 6 February 2004 | Deckwerth, M |

EPO FORM 1503 03.82 (P04C01)

## ANNEX TO THE EUROPEAN SEARCH REPORT
## ON EUROPEAN PATENT APPLICATION NO.

EP 03 02 3994

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2004

| Patent document cited in search report | | Publication date | Patent family member(s) | | Publication date |
|---|---|---|---|---|---|
| US 6240748 | B1 | 05-06-2001 | US | 5943466 A | 24-08-1999 |
| | | | AU | 719604 B2 | 11-05-2000 |
| | | | AU | 1579497 A | 11-08-1997 |
| | | | BR | 9707059 A | 20-07-1999 |
| | | | CA | 2242989 A1 | 24-07-1997 |
| | | | CN | 1209793 A ,B | 03-03-1999 |
| | | | EP | 0876305 A1 | 11-11-1998 |
| | | | JP | 3226283 B2 | 05-11-2001 |
| | | | JP | 11508221 T | 21-07-1999 |
| | | | RU | 2166484 C2 | 10-05-2001 |
| | | | WO | 9726221 A1 | 24-07-1997 |
| EP 0582405 | A | 09-02-1994 | US | 5298047 A | 29-03-1994 |
| | | | CA | 2098747 A1 | 04-02-1994 |
| | | | CN | 1083449 A ,B | 09-03-1994 |
| | | | DE | 69327823 D1 | 16-03-2000 |
| | | | DE | 69327823 T2 | 27-07-2000 |
| | | | DK | 582405 T3 | 13-06-2000 |
| | | | EP | 0582405 A1 | 09-02-1994 |
| | | | JP | 2981088 B2 | 22-11-1999 |
| | | | JP | 6171970 A | 21-06-1994 |
| | | | MX | 9304583 A1 | 28-02-1994 |
| | | | US | 5418881 A | 23-05-1995 |
| US 2001046358 | A1 | 29-11-2001 | EP | 1258751 A1 | 20-11-2002 |
| | | | WO | 0135132 A1 | 17-05-2001 |
| | | | TW | 544532 B | 01-08-2003 |
| US 5822487 | A | 13-10-1998 | US | 5704960 A | 06-01-1998 |
| | | | AU | 705950 B2 | 03-06-1999 |
| | | | AU | 1288097 A | 14-07-1997 |
| | | | CA | 2210470 A1 | 26-06-1997 |
| | | | CN | 1176005 A | 11-03-1998 |
| | | | DE | 69621779 D1 | 18-07-2002 |
| | | | DE | 69621779 T2 | 02-01-2003 |
| | | | EP | 0811176 A1 | 10-12-1997 |
| | | | JP | 11501133 T | 26-01-1999 |
| | | | WO | 9722897 A1 | 26-06-1997 |
| WO 9846536 | A | 22-10-1998 | US | 6324872 B1 | 04-12-2001 |
| | | | AT | 236094 T | 15-04-2003 |
| | | | AU | 741370 B2 | 29-11-2001 |
| | | | AU | 3794597 A | 11-11-1998 |
| | | | BR | 9714471 A | 16-05-2000 |
| | | | CA | 2224344 A1 | 12-10-1997 |
| | | | CN | 1209792 A | 03-03-1999 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 03 02 3994

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2004

| Patent document cited in search report | | Publication date | Patent family member(s) | | Publication date |
|---|---|---|---|---|---|
| WO 9846536 | A | | DE | 69720445 D1 | 08-05-2003 |
| | | | EP | 0907617 A1 | 14-04-1999 |
| | | | JP | 11508222 T | 21-07-1999 |
| | | | JP | 3224235 B2 | 29-10-2001 |
| | | | TW | 450947 B | 21-08-2001 |
| | | | WO | 9846536 A1 | 22-10-1998 |
| | | | US | 2002026813 A1 | 07-03-2002 |
| WO 0203115 | A | 10-01-2002 | AU | 7059001 A | 14-01-2002 |
| | | | BR | 0112220 A | 13-05-2003 |
| | | | WO | 0203115 A1 | 10-01-2002 |
| | | | EP | 1297371 A1 | 02-04-2003 |

EPO FORM P0459

For more details about this annex : see Official Journal of the European Patent Office, No. 12/82